# EUROPEAN PATENT APPLICATION

(11) **EP 0 603 535 A1**
(43) Date of publication of application: **29.06.1994**
(21) Application number: 93118409.7
(22) Date of filing: 13.11.1993
(51) Int. Cl.: H04N 5/45

(54) **Tuner signal switching apparatus**

(30) Priority: 23.11.1992 US 979152
(71) Applicant: THOMSON CONSUMER ELECTRONICS, INC., Indianapolis Indiana 46201 (US)
(72) Inventor: Ersoz, Nathaniel Haluk, Brownsburg, IN (US); Lendaro, Jeffery Basil, Noblesville, IN (US)
(74) Representative: Wördemann, Hermes, Dipl.-Ing.

(57) **Abstract**

A television receiver employs two tuners (120,121), with respective signal processing paths, for displaying on a display screen (180) a primary picture from a first tuner (120,121), and a secondary picture from the other tuner (120,121). When both tuners are tuned to the same television channel, a controller (150) controls a switch arrangement (135) to select the signal from the first tuner (120,121) for displaying both the primary and secondary pictures, to eliminate differences in the images caused by differences in the characteristics of the two tuners, and their respective signal processing paths.

## Description

### FIELD OF THE INVENTION

This invention relates to the field of television receivers having a dual picture display capability.

### BACKGROUND OF THE INVENTION

Many modern television receivers have picture-in-picture (PIP, or PIX-IN-PIX) capability, that is, the capability to receive video signals from two different sources and combine them to produce a signal which when displayed includes a first program in a main viewing area, and a second program in a secondary (inset) viewing area of the same display screen. The present invention is also applicable to television receivers having other dual picture display capabilities such as picture outside of picture (POP).

International Patent Application Serial No. PCT 91/03742 (Willis), entitled SIDE BY SIDE TELEVISION PICTURES, filed 29 May 1991, and assigned to the same assignee as the subject application, discloses apparatus for displaying two horizontally-cropped 4:3 aspect ratio television images, side by side on a 16:9 aspect ratio (i.e., widescreen) display screen.

A television receiver employing two tuners has the capability of simultaneously displaying a full motion main picture from the first tuner, and a full motion secondary picture from the other tuner. The secondary picture may be displayed in a smaller size as an inset, or may be displayed in the same size as the main picture in the side by side format discussed above. In this way, a user can continuously view a television program from a particular television channel tuned by the first tuner, while simultaneously scanning all channels sequentially via the second tuner.

During such a scanning operation, both tuners will, at some point, be tuned to the same television channel, and in the side by side mode of operation, it is reasonable for the viewer to expect to see two identical pictures displayed with identical quality. Unfortunately, the pictures will have observable differences which may include differences in contrast, tint, saturation, and transient response. These observable differences occur for the following two reasons. First, the circuitry of the two tuners may not be the same. This is because the second tuner is used for tuning a secondary picture (usually smaller than the main picture), and is not used for producing the primary picture. Thus, due to realities of the marketplace, the manufacturing cost allotted for the second tuner may be less than that allowed for the first, or primary, tuner. Second, even in the case where the manufacturer has incurred the additional expense of providing two tuners of the same kind, inherent differences in the bandpass characteristics caused by tolerances in the parts and alignment of the two tuners will cause noticeable differences between the two pictures.

### SUMMARY OF THE INVENTION

A television receiver employs two tuners, with respective signal processing paths, for displaying on a display screen a first picture from a first tuner, and a second picture from a second tuner. When both tuners are tuned to the same television channel, a controller controls a switch arrangement to select the signal from the first tuner for displaying both the primary and secondary pictures, to eliminate differences in the images caused by differences in the characteristics of the two tuners, and their respective signal processing paths.

### BRIEF DESCRIPTION OF THE DRAWING

FIGURE 1 illustrates, in block diagram form, an embodiment of the invention.

FIGURE 2 illustrates a 16:9 aspect ratio television receiver producing two side by side horizontally-cropped 4:3 aspect ratio images, as known from the prior art, but useful in understanding the invention.

FIGURE 3 illustrates amplitude versus frequency graphs, as known from the prior art, but useful in understanding the invention.

FIGURE 4 illustrates, in block diagram form, another embodiment of the invention.

### DETAILED DESCRIPTION OF THE EMBODIMENT

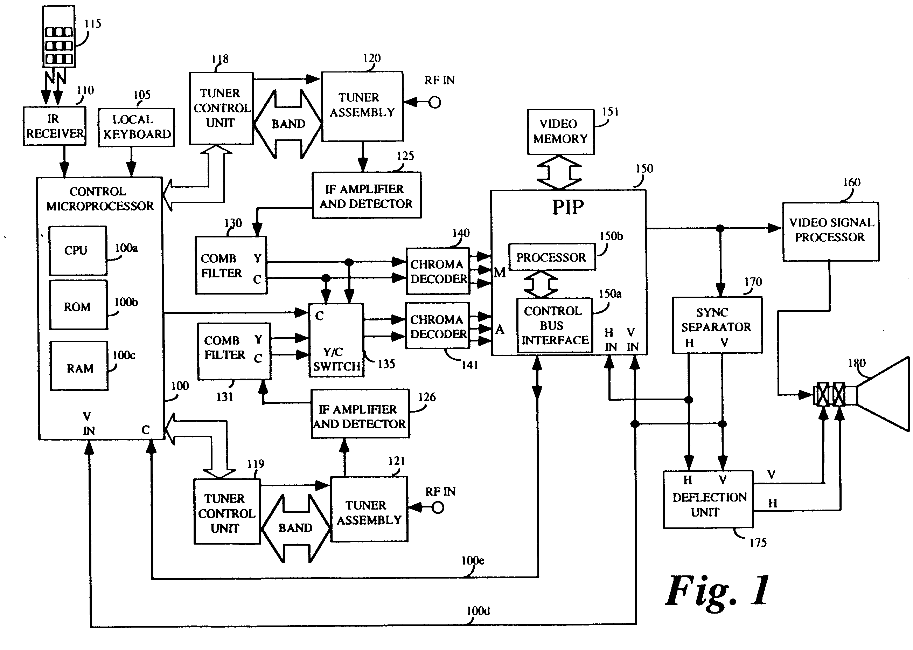

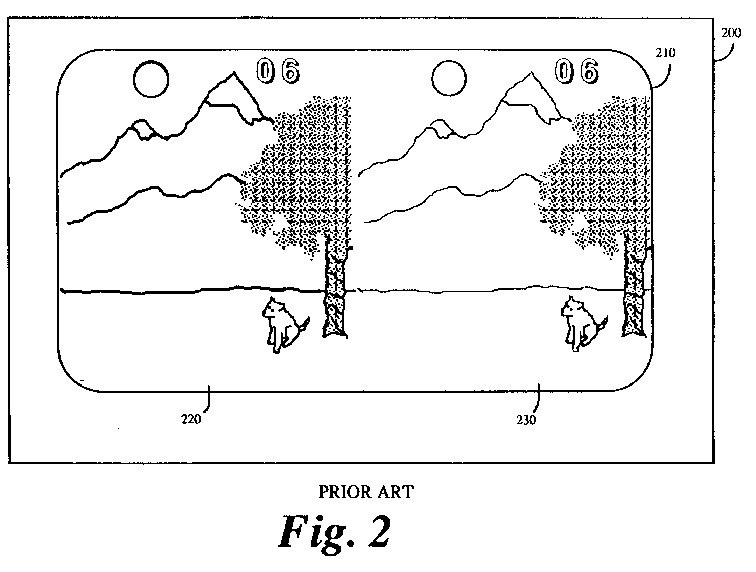

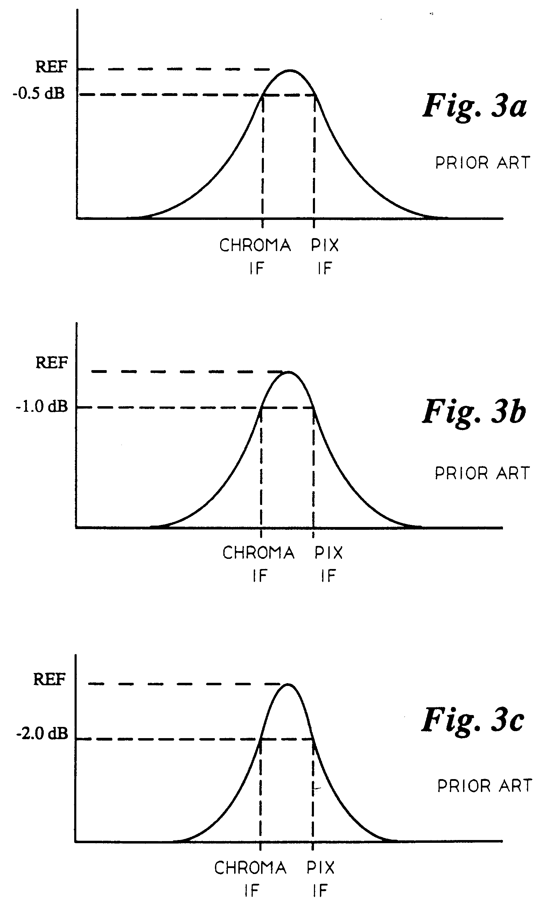

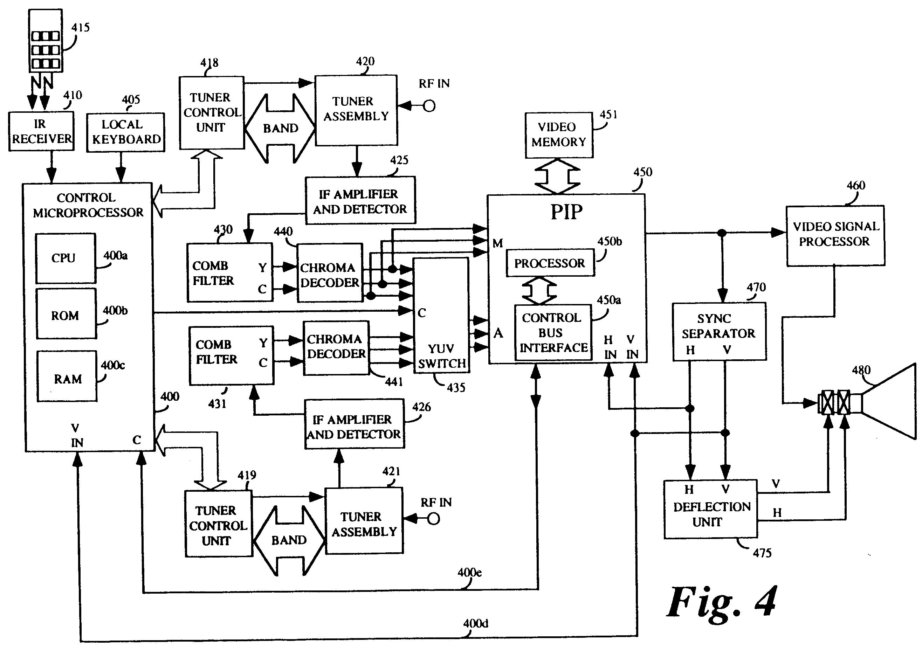

A brief overview of the problem to be solved, with reference to FIGURES 2 and 3, may be helpful in understanding the invention to be described below, before referring to FIGURES 1 and 4.

Referring to FIGURE 2, a television receiver 200 includes a 16:9 aspect ratio display screen 210. Television receiver 200 includes two tuners (not shown in this FIGURE) which provide primary and secondary images for display. As shown in FIGURE 2, both tuners are tuned to the same channel (channel 06). For purposes of explanation, the primary image 220 is displayed on the left side of display screen 210, and the secondary image 230 is displayed on the right side of display screen 210. For clarity, primary image 220 is drawn slightly darker than secondary image 230, in order to simulate observable differences between the two images. Such differences are caused by differences in the characteristics of the two tuners and their associated respective signal processing paths, and are objectionably noticeable to a viewer. Such a noticeable difference between the two images may generate unnecessary service calls.

A cause of these differences is shown in FIGURE 3 (not drawn to scale). A tuner having a typical (idealized) amplitude versus frequency characteristic is shown in FIGURE 3b. FIGURE 3a shows a tuner with a slightly wider bandpass characteristic resulting in a higher output signal level. FIGURE 3c illustrates a tuner having a narrower bandpass characteristic which results in a lower output signal level. In addition to shape (wide or narrow) of the tuner bandpass characteristic, another factor which introduces differences is the "tilt" (distortion of the shape) of the IF (intermediate frequency) amplifier's frequency response. These differences are generally not noticeable when the tuners are tuned to different television channels because the eye cannot readily compare different pictures. However, as noted above, the differences become much more apparent when the tuners are tuned to the same channel. It is herein recognized that the solution to this problem is to switch out the second tuner when it is tuned to the same channel as the first tuner, and to use the signal from the first tuner for both the primary and secondary displays. It is also herein recognized that because the same controller controls both tuning and switching, it is not necessary to cause the secondary tuner to actually tune the same channel as the primary tuner since the output of the secondary tuner will not be used.

Referring to FIGURE 1, a controller 100 includes a central processing unit CPU 100a, a read only memory array 100b, and a random access memory array 100c. Controller 100 receives user-entered control signals from a local keyboard 105 and from an infrared (IR) receiver 110. IR receiver 110 receives and decodes remote control signals transmitted by a remote control unit 115. Controller 100, which may be a microprocessor or microcomputer, causes a first television tuner controller 118 to control a first tuner 120 to select a particular RF signal to be tuned in response to data entered by a user. Tuner 120 produces a signal at an intermediate frequency (IF) and applies it to a first IF AMPLIFIER AND DETECTOR unit 125 which includes a picture processing portion including a picture (PIX) amplifying stage, an AFT circuit, and video detector, and a sound processing portion including a sound amplifying stage, an audio detector and a stereo decoder. First IF AMPLIFIER AND DETECTOR unit 125 produces a first baseband video signal, and first baseband left and right audio signals.

The first baseband video signal is coupled to a first COMB FILTER unit 130 which filters the signal and separates it into first luminance Y and chrominance C components. First luminance Y and Chrominance C components are applied to a first CHROMA DECODER 140 and to one input of a Y/C VIDEO SWITCH 135. The first baseband left and right audio signals are applied to an audio processing section (not shown).

Controller 100 also causes a second television tuner controller 119 to control a second tuner 121 to select a particular RF signal to be tuned in response to data entered by a user. Second tuner 121 produces a signal at an intermediate frequency (IF) and applies it to a second IF AMPLIFIER AND DETECTOR unit 126 which includes a picture processing portion including a picture (PIX) amplifying stage, an AFT circuit, and video detector, and a sound processing portion including a sound amplifying stage, an audio detector and a stereo decoder. Second IF AMPLIFIER AND DETECTOR unit 126 produces a second baseband video signal, and second baseband left and right audio signals.

The second baseband video signal is coupled to a second COMB FILTER unit 131 which filters the signal and separates it into second luminance Y and chrominance C components. Second luminance Y and Chrominance C components are applied via the other input of Y/C VIDEO SWITCH 135 to a second CHROMA DECODER 141. The second baseband left and right audio signals are applied to an audio processing section (not shown).

Controller 100 controls the state of Y/C switch 135 via a signal coupled via line 137. The selected Y/C video signals are applied via a picture-in-picture (PIP or WIDESCREEN) unit 150 to a video processor unit 160 and ultimately displayed on a display screen of a display device 180. Video signals are also applied to a sync separator unit 170 which derives vertical and horizontal synchronizing signals therefrom. The derived vertical and horizontal synchronizing signals are applied to a DEFLECTION unit 175 which generates beam scanning signals for display device 180.

In accordance with the subject invention, the M (Main) signal input of PIP unit 150 is connected to receive baseband YUV video signals from the first tuner/IF circuitry of the television receiver, and the A (Aux) signal input is connected to receive the output signal of video switch 135 via Chroma Decoder 141. PIP unit 150 has a VS IN input for receiving vertical rate synchronizing signals and an HS IN input for receiving horizontal rate synchronizing signals from sync separator unit 170. Sync separator unit 170 also couples vertical synchronizing signals to a V IN terminal of controller 100 via a line 100d. PIP unit 150 has a control input to which a serial control bus 100e is coupled. Serial control bus 100e couples command data from controller 100 which controls PIP unit 150 to produce an image for display having a main (or primary) picture and an inset (or secondary) picture. Under controller command, via serial bus 100e, the PIP function may be enabled and disabled. PIP unit 150 includes a control bus interface unit 150a and a processing unit 150b.

The structure of FIGURE 1 provides for selection of one of two video signals in response to control signals applied via line 137. When controller 100 determines that the user wants tuners 120 and 121 to be tuned to the same channel, controller 100 causes Y/C switch 135 to select the output of tuner 120 as the signal to be coupled to the A input of PIP unit 150. Thus, the output signal of tuner 120 is coupled to both the main M and aux A inputs of PIP unit 150. In this way, the differences in the signals applied to the inputs of PIP unit 150 caused by differences in the separate tuner, IF, and comb filter chains are eliminated.

A second embodiment of the invention is shown in FIGURE 4. Those elements of FIGURES 1 and 4 which bear similar reference numbers, serve the same functions and therefore need not be described again in detail. In this embodiment, a YUV switch 435 is located after the chroma decoder 441 to eliminate any differences in the signal which may be introduced by differences in the characteristics of chroma decoders 440 and 441.

The term "television receiver" as used herein includes television receivers having a display device (commonly known as television sets), and television receivers without a display device, such as videocassette recorders (VCR's).

The term "television receiver" as used herein also includes television monitor/receivers having an RF tuner and baseband signal input circuitry.

## Claims

1. A television apparatus comprising:
a first tuner (118, 418, 120, 420, 125, 425) for tuning a first television channel and providing a first output signal including a first video component to a first signal processor (150, 450);
a second tuner (119, 419, 121, 421, 126, 426) for tuning a second television channel and providing a second output signal including a second video component to a second signal processor (150, 450); characterized by
a controller (100, 400) for determining when both of said first and second tuners are tuned to the same channel; and
a switch (135, 435) for providing one of said first and second video components to both of said first and second signal processors (150, 450) under control of said controller (100, 400) when said controller has determined that both of the first and second tuners are tuned to the same television channel.

2. A television receiver, comprising:
a first tuner-demodulator (118, 418, 120, 420, 125, 425) for tuning a first channel and developing a first video signal;
a second tuner-demodulator (119, 419, 121, 421, 126, 426) for tuning a second channel and developing a second video signal;
a switch (135, 435) for producing a selected one of said first and second video signals;
a signal processing circuit (150, 450) for processing said first video signal and said selected video signal to form a combined signal which when displayed on a display screen produces a picture comprised of two simultaneously displayed images; and characterized by
a controller (100, 400) for determining when both of said first and second tuner-demodulators are tuned to the same channel;
said switch (135, 435) selecting said first video output signal under control of said controller (100, 400) when said controller has determined that each of said first and second tuners is tuned to the same channel, so that each of said two images are derived from said first video signal.

3. The television receiver of claim 2 wherein characterized in that, said signal processing circuit (150, 450) produces a display signal which when displayed on a display screen produces a picture comprising simultaneously-displayed images of substantially equal size being displayed side-by-side and together substantially filling said display screen.

4. The television receiver of claim 3 wherein characterized in that, said display screen being a widescreen display screen having an aspect ratio of approximately 16:9, and said simultaneously-displayed images are two horizontally-cropped images each being derived from pictures having an aspect ratio of approximately 4:3.
